# EUROPEAN PATENT SPECIFICATION

(11) **EP 2 269 861 B1**
(45) Date of publication and mention of the grant of the patent: **07.12.2016**
(21) Application number: 09734798.3
(22) Date of filing: 21.04.2009
(51) Int. Cl.: B60N 2/28

(54) **CHILD SEAT**
KINDERSITZ
SIÈGE POUR ENFANT

(30) Priority: 22.04.2008 JP 2008111547
(43) Date of publication of application: 05.01.2011
(73) Proprietor: Takata Corporation, Tokyo 107-8508 (JP)
(72) Inventor: YAMANISHI, Takahiro, Tokyo 107-8508 (JP)
(74) Representative: Banzer, Hans-Jörg
(86) International application number: PCT/JP2009/057927
(87) International publication number: WO 2009/131123

(56) References cited:
- EP-A1- 1 669 251
- WO-A1-92/17731
- JP-A- 11 291 799
- JP-A- 2002 079 910
- JP-A- 2002 079 910
- JP-A- 2003 252 094
- US-A- 5 260 684
- US-A- 5 260 684

## Description

### Technical Field

The present invention relates to a child seat to be mounted on a motor vehicle seat and, more particularly, it relates to a child seat to be secured by a seat belt of a motor vehicle seatbelt apparatus.

### Background Art

Various structures for securing a child seat mounted on a motor vehicle seat to the seat have been proposed. One of such structures is disclosed in Japanese Unexamined Patent Application Publication No. 2003-252094, which secures the child seat by causing the seatbelt of a motor vehicle seatbelt apparatus to passing through a belt insertion hole formed in the child seat.

The child seat disclosed in the above publication is configured to be mounted on the motor vehicle seat so as to face either forward or rearward of the vehicle. The child seat is provided at the bottom thereof with a bottom block which is movable at the bottom so as to take a rearward location of the motor vehicle whether the child seat is mounted to face forward or rearward.

A child seat according to the preamble of claim 1 is known from US 5,260,684 A. In addition, WO 92/17731 A1 discloses a vehicle occupant restraint belt buckle including illumination, in which the inserting position of a seat belt is indicated by means of light emitters.

### Summary of Invention

It is an object of the present invention to, when mounting a child seat having a plurality of belt insertion members on a vehicle seat and securing it with the seat belt, provide the child seat which can extremely easily identify the belt insertion members through which the seatbelt is to be inserted.

According to the invention, this object is achieved by a child seat as defined in claim 1. The dependent claims define preferred embodiments of the invention.

### Brief Description of Drawings

[Fig. 1] Fig. 1 is a perspective view of a child seat according to an embodiment.
[Fig. 2] Fig. 2 is a perspective view of a child seat according to an embodiment.
[Fig. 3] Fig. 3 is a perspective view showing the back side of a child seat according to an embodiment.
[Fig. 4] Fig. 4 is a cross-sectional view showing the structure for mounting a limit switch.
[Fig. 5] Fig. 5 is a perspective view of a child seat mounted so as to face forward.
[Fig. 6] Fig. 6 is a perspective view of a child seat mounted so as to face rearward.
[Fig. 7] Fig. 7 is a front view of a tongue and buckle for child use.
[Fig. 8] Fig. 8 is a perspective view of a child seat according to another embodiment, which is mounted so as to face forward.
[Fig. 9] Fig. 9 is a perspective view of a child seat according to another embodiment, which is mounted so as to face rearward.
[Fig. 10] Fig. 10 is a perspective view showing the back section of a child seat according to an embodiment.
[Fig. 11] Fig. 11 is a perspective view of a belt insertion member.
[Fig. 12] Fig. 12 is a cross-sectional view taken along line XII - XII of Fig. 11.
[Fig. 13] Fig. 13 is a perspective view of a belt insertion member.
[Fig. 14] Fig. 14 is a cross-sectional view taken along line XIV - XIV of Fig. 13.
[Fig. 15] Fig. 15 is a perspective view showing a bottom section of a child seat according to another embodiment.
[Fig. 16] Fig. 16 is a perspective view of a belt insertion member.
[Fig. 17] Fig. 17 is a cross-sectional view taken along line XVII - XVII of Fig. 16.
[Fig. 18] Fig. 18 is a perspective view of a belt hook portion.
[Fig. 19] Fig. 19 is a cross-sectional view taken along line XIX - XIX of Fig. 18.
[Fig. 20] Fig. 20 is a perspective view of a child seat according to another embodiment.
[Fig. 21] Fig. 21 is a cross-sectional view taken along line XXI - XXI of Fig. 20.

### Detailed Description

In a child seat according to the first embodiment, a belt insertion member through which a seatbelt is to be inserted is indicated by illumination of a light emitter, thereby allowing extremely easy identification of the belt insertion member through which the seatbelt is to be inserted when an attempt is made to insert the seatbelt through the belt insertion member after the child seat is mounted on a vehicle seat.

In a child seat according to the second embodiment, when a seatbelt is inserted through a belt insertion member, a belt detector detects that the seatbelt has been inserted, which causes a light emitter on that belt insertion member to go out, thereby allowing determination as to whether the seatbelt has been inserted through the belt insertion member. Also, causing all light emitters to go out allows determination as to whether insertion of the seatbelt has been completed.

In a child seat that is provided with a limit switch as a belt detector in accordance with the third embodiment, when the seatbelt is inserted through the belt insertion member and a tension greater than a predetermined level is exerted on the seatbelt, the light emitter goes out. If the seatbelt is loose after it is inserted through the belt insertion member, the limit switch does not work, and as a result the light emitter does not go out.

Accordingly, when the light emitter goes out, a determination can be easily made as to whether a tension greater than a predetermined level is exerted on the seatbelt inserted through the belt insertion member.

In a child seat according to the fourth embodiment, when the start switch is pressed down, the light emitter on the first belt insertion member lights up. If the seatbelt is inserted through the first belt insertion member, the light emitter on the first belt insertion member goes out and subsequently the light emitter on the second belt insertion member lights up. Accordingly, when an attempt is made to insert the seatbelt through each of the belt insertion members, a series of belt insertion operation, namely, the seatbelt insertion through the first belt insertion member followed by the insertion through the second belt insertion member, can easily be performed.

In a child seat according to the fifth embodiment, the light emitter on the forward facing installation belt insertion member lights up when the child seat is mounted so as to face forward of the vehicle, while the light emitter on the rearward facing installation belt insertion member lights up when the child seat is mounted so as to face rearward of the vehicle. Accordingly, the belt insertion member through which the seatbelt is to be inserted can easily be identified whether the child seat is mounted so as to face forward or rearward.

In a child seat according to the sixth and seventh embodiments, the belt insertion member through which the seatbelt is to be inserted can easily be identified even if the location of the belt insertion member differs depending on the orientation in which the child seat is mounted.

In a child seat according to the eighth embodiment, the orientation in which the child seat is mounted can be detected by the location at which the bottom block provided at the bottom of the child seat is disposed.

In a child seat according to the ninth embodiment, the orientation in which the child seat is mounted can be detected by the reclining angle of the child seat body.

In a child seat according to the tenth embodiment, when a child is seated in the child seat, the light emitter provided on the insertion slot of the buckle lights up, thereby allowing the insertion slot through which the tongue of a child webbing is to be inserted to be easily identified.

In a child seat according to the eleventh embodiment, the light emitter consumes less electricity as well as attracts operator's attention due to its flashing operation.

Embodiments will be further described below with reference to the drawings.

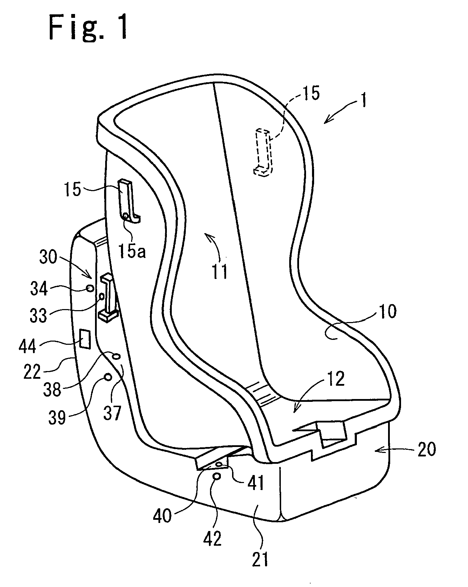

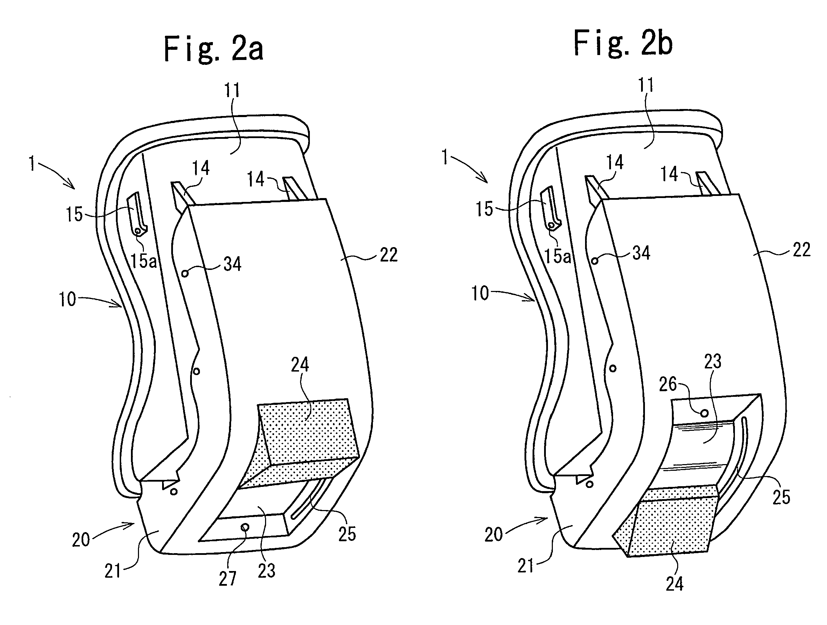

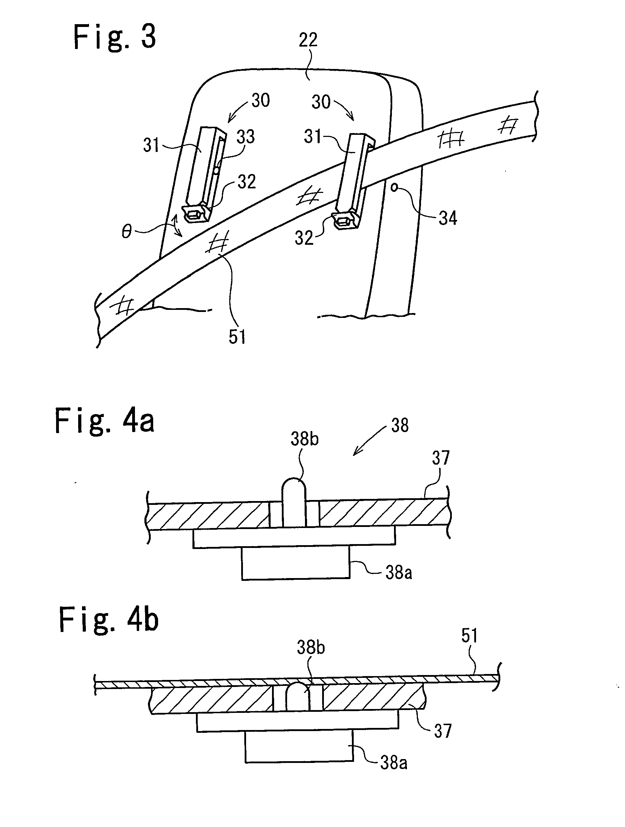

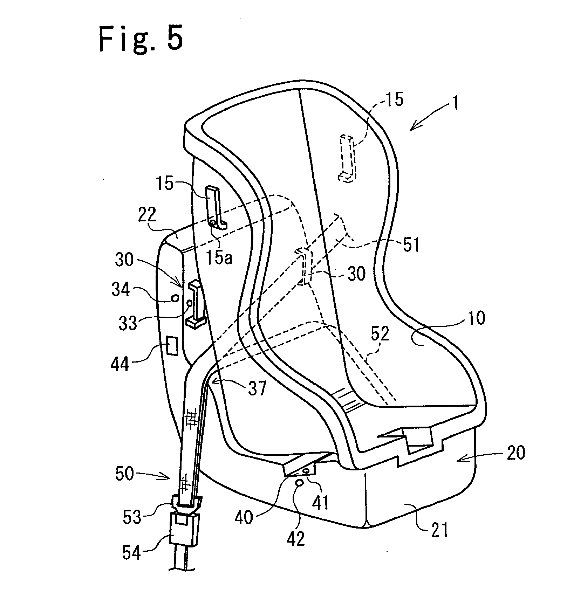

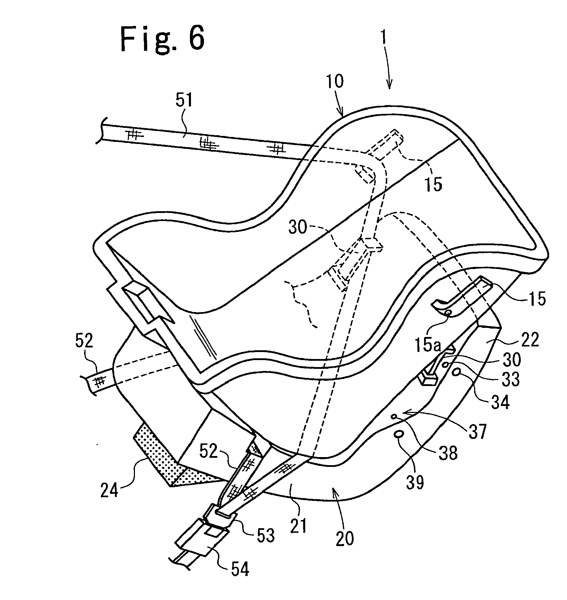

Fig. 1 is a perspective view of a front side of a child seat according to an embodiment. Figs. 2a and 2b are perspective views of a rear side of a child seat body. Fig. 3 is a perspective view of an upper back side of a base. Figs. 4a and 4b are cross-sectional views showing the structure of a limit switch. Figs. 5 and 6 are perspective views of a child seat through which a seatbelt is inserted. Reference to upper or lower, left or right, or front or rear is relative to the person's position in the child seat.

A child seat 1 has a child seat body 10 and a base 20 in which the child seat body 10 is reclinably mounted. The child seat body 10 has a seat back 11 and a seating section 12.

A pair of projecting pieces 14 project rearward from right and left sides on the upper back side of the seat back 11. The projecting pieces 14 are engaged with a guide (not illustrated) of the base 20 so as to be vertically slidable.

The child seat body 10 has belt hook portions 15 provided at both upper right and left sides thereof, on which a seatbelt is adapted to be hooked when the child seat 1 is mounted so as to face rearward of the vehicle. In this embodiment, the belt hook portion 15 is an L-shaped hook when viewed in side and has an open upper end. In this embodiment, the belt hook portion 15 is provided separately from the child seat body 10 and is secured at the lower end thereof to the side of the child seat body 10 with a fastener 15a such as a bolt. The belt hook portion 15 may be formed integrally with the child seat body 10.

In this embodiment, a belt detector is not provided which detects that a seatbelt is passed through the belt hook portion 15.

In the present invention, as is the case with belt insertion members 30, 37, 40 to be mentioned later, a limit switch may be provided at the side of the child seat body 10 so as to be located close to the belt hook portion 15, thereby detecting that the seatbelt is inserted through the belt hook portion 15. In addition, a light emitter such as a LED may be provided close to the belt insertion portion 15 at the side of the child seat body 10 so that the light emitter lights up or goes out according to the detection of the limit switch.

Although the child seat body 10 is provided with a child webbing for restraining a seated child and a buckle into which the tongue of the child webbing is inserted, illustrations of the child webbing and the buckle are omitted in Figs. 1 through 6.

A base 20 is a substantially L-shaped component, when viewed in side, having a bottom section 21 and a back section 22 upstanding from the bottom section 21. The base 20 is provided with a guide rail (not illustrated) for reclinably supporting the child seat body 10.

The bottom section 21 has a recessed portion 23 provided at the bottom thereof so as to extend toward the lower back side of the back section 22, and the bottom block 24 is engaged with the recessed portion 23 so as to be movable in the forward and rearward directions.

The recessed portion 23 has guide grooves 25 formed in right and left upstanding walls thereof so as to extend backward and forward, and guide pins (not illustrated) projecting from both sides of the bottom block 24 are engaged with the guide grooves 25, thereby causing the bottom block 24 to be slidable in the forward and rearward directions.

The bottom block 24 has a trapezoidally-shaped longitudinal section along the forward and rearward directions. As shown in Fig. 2a, when the bottom block 24 is located at the rearmost position (when viewed from the child seated on the child seat) of the recessed portion 23, the bottom block 24 extends downward below the rear bottom surface of the bottom section 21, thereby causing the child seat 1 to be suitable for forward facing installation. The recessed portion 23 is provided with a limit switch 26 for detecting that the bottom block 24 is located at the rearmost position.

As shown in Fig. 2b, if the bottom block 24 is located at the foremost position, the bottom block 24 extends downward below the front bottom surface of the bottom section 21, thereby causing the child seat 1 to be suitable for rearward facing installation. The recessed portion 23 is provided with a limit switch 27 for detecting that the bottom block 24 is located at the foremost position. In the state shown in Fig. 2b, the bottom block 24 is thickening toward its front portion and increasing a projection below the bottom section 21 toward its front portion.

As shown in Fig. 3, the back section 22 has belt insertion members 30 provided at both right and left sides on the upper front face thereof. Each of the insertions sections 30 has a downward facing L-shaped hook 31 and a lock 32 that is engaged with the lower end of the hook portion 31. The lock portion 32 is secured by a hinge (not illustrated) so as to be rotatable in the direction indicated by arrow θ.

If the lock portion 32 is rotated downward, the shoulder webbing 51 of the seatbelt can be taken into and out of the belt insertion members 30. The belt insertion members 30 are provided with a limit switch 33 for detecting that the seatbelt is inserted. LEDs (34) are provided close to the belt insertion members 30 at either upper side of the back section 22. Each of the LEDs 34 consists of a pair of a red-colored LED and a blue-colored LED and is configured to light up in red or blue according to the instruction from a control circuit to be mentioned later. More specifically, in this embodiment, the LEDs 34 are configured to light up in red if the child seat is mounted so as to face forward, while the LEDs 34 are configured to light up in blue if the child seat is mounted so as to face rearward.

Upward facing, step-like belt insertion members 37 are provided at both right and left sides on the front face of the back section 22 so as to be located halfway from the top of the back section to the bottom section, and the belt insertion members 37 are provided with a limit switch 38 for detecting presence of the seatbelt. LEDs 39 are provided close to the belt insertion members 37 at either side of the back section 22.

Figs. 4a and 4b show the structure for mounting the limit switch 38. The limit switch 38 has a main body 38a mounted on the back side of the belt insertion member 37 and an actuating piece 38b projecting toward the front of the belt insertion member 37 from the main body 38a as shown in Fig. 4a. As shown in Fig. 4b, the limit switch 38 is switched on when the actuating piece 38b is pressed down by the seatbelt 51 and moved backward. The other limit switches have the same structure, although their illustrations are omitted.

A belt insertion member 40 is provided on the upper surface of the bottom section 21.

The belt insertion member 40 has limit switches 41 for detecting the seatbelt provided at both the right and left ends thereof. Also, the child seat body 10 has blue-colored LEDs 42 provided at the sides thereof so as to be located close to the belt insertion member 40.

The back section 22 of the base 20 has a start switch 44 for initiating illumination (flashing in this embodiment) of the LEDs provided at the side thereof. Although not illustrated, the base 20 has a control circuit, connected to the LEDs and the limits switches through a lead wire, and a dry-cell battery for powering the control circuit. The start switch 44 is connected to the control circuit. Means (power supply) for powering the control circuit is not limited to the dry-cell battery. Lithium batteries may be used instead of the dry-cell battery. The control circuit may be powered by an external power supply, for example, a vehicle battery through a vehicle cigar lighter socket, instead of the dry-cell battery or lithium battery provided in the child seat 1.

As shown in Figs. 5 and 6, the seatbelt 50 of the vehicle seatbelt apparatus includes a shoulder belt 51 that is at one side of the tongue 53 and a lap belt 52 that is at the other side of the tongue 53. The tongue 53 can be attached to a buckle 54. The shoulder belt 51 is hooked on so as to pass through a shoulder anchor (not illustrated) provided on the opposite side, obliquely upward, of the buckle 54 of the vehicle seat. The seatbelt 50 is withdrawn from a seatbelt retractor (not illustrated) having a built-in automatic locking mechanism. The automatic locking mechanism means a mechanism that, once seatbelt withdrawing operation ceases, prevents the seatbelt from being further withdrawn and permits only seatbelt taking-up operation until the tongue is released from the buckle.

Steps for mounting the child seat 1 on the vehicle seat using the seatbelt 50 are described below.

When an attempt is made to mount the child seat 1 so as to face forward, the bottom block 24 is moved to the rearmost position of the recessed portion 23, as shown in Fig. 2a. The child seat 1 is mounted on a vehicle seat so as to face forward of the vehicle. The back section 22 is pressed against the seat back of the seat. Then, the start switch 44 is pressed down, which causes the red-colored LED 39 to light up. The operator passes the tongue 53 through a space created between the child seat body 10 and the back section 22 and inserts it into the buckle 54 until the buckle 54 is latched. Then the lap belt 52 is put on and along the belt insertion member 37, which causes the lap belt 52 to come into contact with the limit switch 38, resulting in detection of the fact that the lap belt 52 has been routed along the belt insertion member 37. As a result, the LED 39 goes out and the LED 34 located upward flashes. As described above, for forward facing installation, the LED 34 flashes in red which is the same illumination color as the LED 39. Then, as shown in Figs. 3 and 5, the operator passes the shoulder belt 51 through the belt insertion member 30, which causes the shoulder belt 51 to come into contact with the limit switch 33, resulting in deactivation of the LED 34. This results in deactivation of all of the LEDs, thereby allowing determination to be made as to whether the child seat 1 is mounted on the seat using the seatbelt 50.

Then, steps for mounting the child seat 1 so as to face rearward are described below with reference to Fig. 6.

In order to do this, the bottom block 24 is located at the foremost position of the recessed portion 23, as shown in Fig. 2b. The child seat 1 is mounted on a vehicle seat so as to face forward of the vehicle, namely, in such a manner that, when a child is seated on the child seat 1, the child faces rearward of the vehicle.

Pressing down the start switch 44 causes the blue-colored LED 42 to flash. Then, the operator passes the tongue 53 and the lap belt 52 through a space created between the child seat body 10 and the bottom section 21 and inserts the tongue 53 into the buckle 54 until the buckle 54 is latched. The lap belt 52 is then put on and along the belt insertion member 40, which causes the lap belt 52 to come into contact with the limit switch 41. As a result, the LED 42 goes out and the LED 34 lights up. As described above, for rearward facing installation, the LED 34 flashes in blue which is the same illumination color as the LED 42. As shown in Fig. 6, the operator hooks the shoulder belt 51 on the belt insertion member 15, located at the shoulder anchor side, of the right and left belt insertion members 15 on the child seat body 10, and puts the shoulder belt 51 obliquely behind the child seat body 10 so as to pass through the belt insertion member 30 located at the shoulder anchor side. At this time, the shoulder belt 51 comes into contact with the limit switch 33, thereby deactivating the LED 34. This results in deactivation of all of the LEDs, thereby allowing a determination to be made as to whether the child seat 1 is secured using the seatbelt 50.

After the child seat 1 is mounted on the seat using the seatbelt 50 as shown in Figs. 5 and 6, the seatbelt 50 may become loosened, for example, when the child seat 1 is pressed against the seat. If this occurs, some of the limit switches detect that the seatbelt is absent. At this time, some (or all) of the LEDs close to these limit switches are configured to light up, thereby informing the operator of the fact that the seatbelt becomes loosened.

In this embodiment, although the LED 39 or 42 flashes until the limit switches initially detect the present of the seatbelt after the start switch 44 is pressed down, flashing of the LED 39 or 42 for a prolonged time causes an increased battery drain. For this, the LED 39 or 42 is configured to stop flashing about 5minutes after the start switch 44 is pressed down.

Although a switch between forward facing installation and rearward facing installation is made by sliding the bottom block 24 in the forward and rearward directions in the above embodiment, such a switch between forward facing installation and rearward facing installation may be made by rotationally moving the bottom block in the forward and rearward directions, as disclosed in Japanese Unexamined Patent Application Publication No. 2003-252094 above. A child seat disclosed in this Publication is "a child seat to be mounted on a motor vehicle seat, which includes a child seat body and a bottom lock rotatably supported on the bottom of the child seat body for adjusting the mounting angle of the child seat, wherein the bottom block is rotatably attached at one end thereof to the child seat body in such a manner that the bottom lock assumes a first state that overlaps the front half of the bottom of the child seat and a second state that overlaps the rear half of the bottom, and wherein the bottom block is thickening toward the other end".

In the present invention, a determination as to whether the child seat body 10 is rearward facing can be made by causing the limit switches to detect that the child seat body 10 is reclined to a large degree and a determination as to whether it is forward facing can be made by causing them to detect that the child seat 10 stands upright.

Although the LEDs are configured to flash in the above embodiment, they may be configured to light up and remain lit.

Although the right and left LEDs are configured to light up at the same time in the above embodiment, either of them may be configured to light up by causing a switch to switch between installation on the right vehicle seat and installation on the left vehicle seat.

In the above embodiment, after the start switch 44 is pressed down, the LED 39 or 42 on the belt insertion member 37 or 40 through which the seatbelt is to be inserted is configured to light up. Thereafter, if the insertion of the seatbelt through the belt insertion member 37 or 40 is detected, the LED 42 or 39 is configure to go out and then the LED 34 on the belt insertion member 30 through which the seatbelt is to be inserted is configured to light up. Nevertheless, at the time of forward facing installation or rearward facing installation, the LEDs on all of the belt insertion members through which the seatbelt is to be inserted may be configured to light up. Thereafter, every time the seatbelt is inserted through one belt insertion member, the LED on that belt insertion member through which the seatbelt has been inserted may be configured to go out.

With this arrangement, when an attempt is made to mount the child seat 1 so as to face forward, depressing the start switch 44 causes the LEDs 39, 34 on all of the belt insertion members 37, 30 through which the seatbelt is to be inserted for the forward facing installation to light up at the same time. The order in which the operator passes the seatbelt through the belt insertion members 37, 30 is as described above. In other words, the operator passes the tongue 53 through a space created between the child seat body 10 and the back section 22 and inserts it into the buckle 54 until the buckle 54 is latched. Then, the lap belt 52 is put on and along the belt insertion member 37, which causes the lap belt 52 to come into contact with the limit switch 38, resulting in detection of the fact that the lap belt 52 has been routed along the belt insertion member 37. As a result, the LED 39 goes out. At this time, the LED 34 located upward remains lit. Then, the operator passes the shoulder belt 51 through the belt insertion member 30, as shown in Figs. 3 and 5, which causes the shoulder belt 51 to come into contact with the limit switch 33, turning off the LED 34. This results in deactivation of all of the LEDs, thereby allowing determination to be made as to whether the child seat 1 is mounted on the seat using the seatbelt 50.

When an attempt is made to mount the child seat 1 so as to face rearward, depressing the start switch 44 causes the LEDs 42, 34 on all of the belt insertion members 40, 30 through which the seatbelt is to be inserted for the rearward facing installation to light up at the same time. Then, the operator passes the tongue 53 and the lap belt 52 through a space created between the child seat body 10 and the bottom section 21 and inserts the tongue 53 into the buckle 54 until the buckle 54 is latched. Then, the lap belt 52 is put on and along the belt insertion member 40, which causes the lap belt 52 to come into contact with the limit switch 41. As a result, the LED 42 goes out. At this time, the LED 34 located upward remains lit. As shown in Fig. 6, the operator hooks the shoulder belt 51 on the belt insertion member 15, located at the shoulder anchor side, of the right and left belt insertion members 15 on the child seat body 10, and puts the shoulder belt 51 obliquely behind the child seat body 10 so as to pass through the belt insertion member 30 located at the shoulder anchor side. At this time, the shoulder belt 51 comes into contact with the limit switch 33, thereby deactivating the LED 34. This results in deactivation of all of the LEDs, thereby allowing a determination to be made as to whether the child seat 1 is secured using the seatbelt 50.

If the LED 39 or 42 on the belt insertion member 37 or 40 and the LED 34 on the belt insertion member 30 through which the seatbelt is to be inserted are configured to light up during the forward facing and rearward facing installation of the child seat 1, the LED 39 or 42 on the seatbelt insertion member 37 or 40 through which the seatbelt is to be inserted in the first place and the LED 34 on the belt insertion member 30 through which the seatbelt is to be inserted in the second place may be configured to light up in a different manner of illumination in order to allow the operator to determine which belt insertion member the seat belt is to be inserted through in the first place.

For example, the LEDs on the belt insertion member through which the seatbelt is to be inserted in the first place may be configured to light up in a different illumination color from that of the LEDs on the other belt insertion members. Alternatively, the LEDs on the belt insertion members through which the seatbelt is to be inserted in the first place may be configured to flash, while the LEDs on the other belt insertion members may be configured to be continuously lit.

In the present invention, when an attempt is made to insert a tongue of a child webbing into a child buckle, a light emitter such as an LED may be used to indicate the tongue insertion slot of the child buckle.

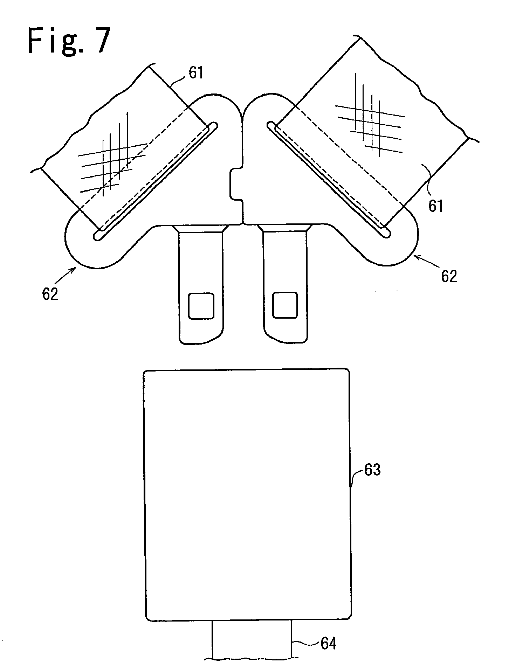

Fig. 7 shows an example of a tongue and buckle for child use, in which a child shoulder webbing 61 has a tongue 62 attached thereto. A buckle 63 is a component to which the tongue 62 is inserted, and is installed through a supporting member 64 to the front of a seating section 12 in the child seat body 10.

The buckle 63 has an insertion slot (not illustrated) for the tongue 62 provided at an upper end thereof, and the insertion slot has an LED provided thereon. The child seat body 10 has a pressure-sensitive seating sensor (not illustrated) provided therein. When the seating sensor detects that a child is seated, the LED flashes for a predetermined period of time (for example, 60 sec to 5 min). When the tongue 62 is inserted into the buckle 63, the sensor (not illustrated) detects the insertion of the tongue, causing the LED to go out. As described above, when a child is seated on a child seat, the LED on the insertion slot of the buckle 63 flashes, thereby allowing the insertion slot to which the tongue 62 is to be inserted to be easily identified. Also, when the tongue 62 is inserted into the buckle 63, the LED goes out, thereby allowing a determination to be made as to whether the tongue 62 is inserted into the buckle 63.

In the present invention, a lamp (OK lamp) indicating that the seatbelt has been properly routed may be provided and be configured to light up (or flash) for a predetermined period of time if the seatbelt is properly routed and any of the predetermined limit switches detects the presence of the seatbelt whether the child seat is mounted to face forward or rearward. Such an OK lap is composed of, for example, a green-colored LED.

Also, a lamp (incompletion lamp) indicating that seatbelt routing has not been completed may be provided and be configured to light up (or flash) when the start switch 44 is depressed, and go out when the seatbelt has been properly routed. Deactivation of the incompletion lamp and activation of the OK lamp for a predetermined period of time may take place simultaneously. The incompletion lamp is composed of, for example, a yellow-colored LED.

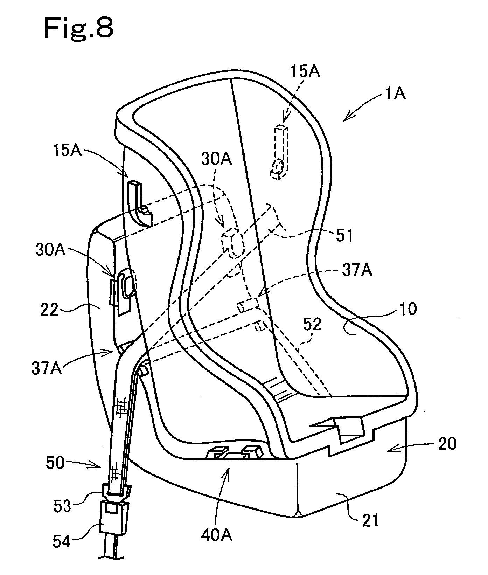

Another embodiment is described below with reference to Figs. 8 through 21.

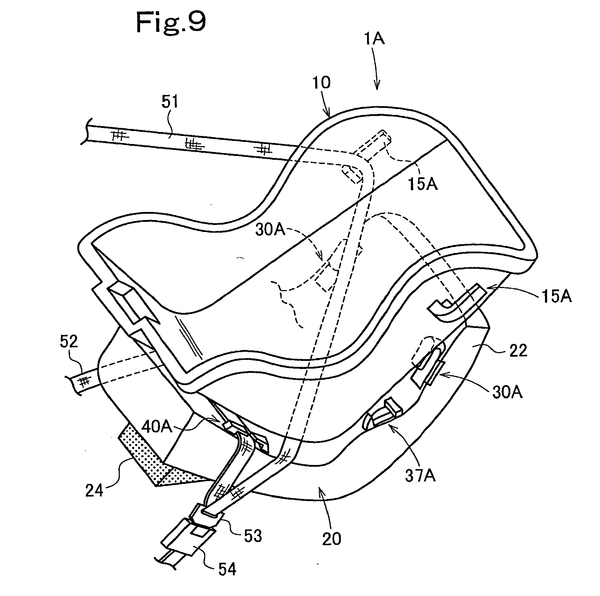

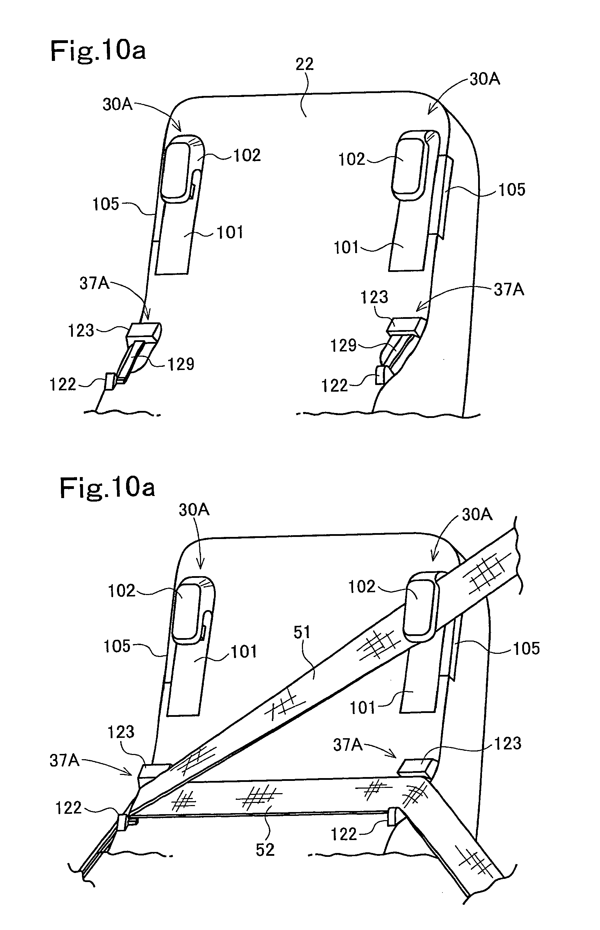

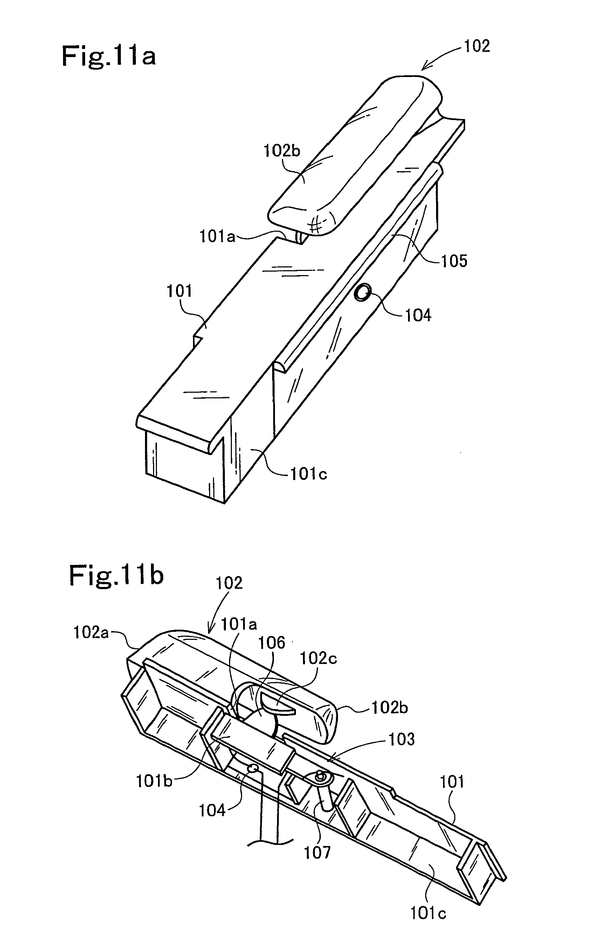

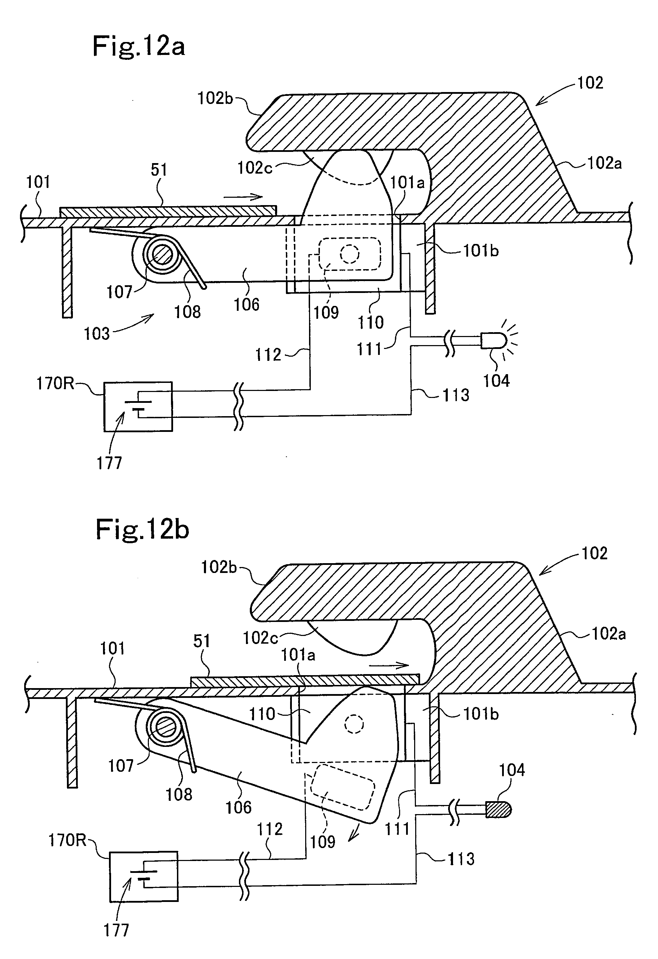

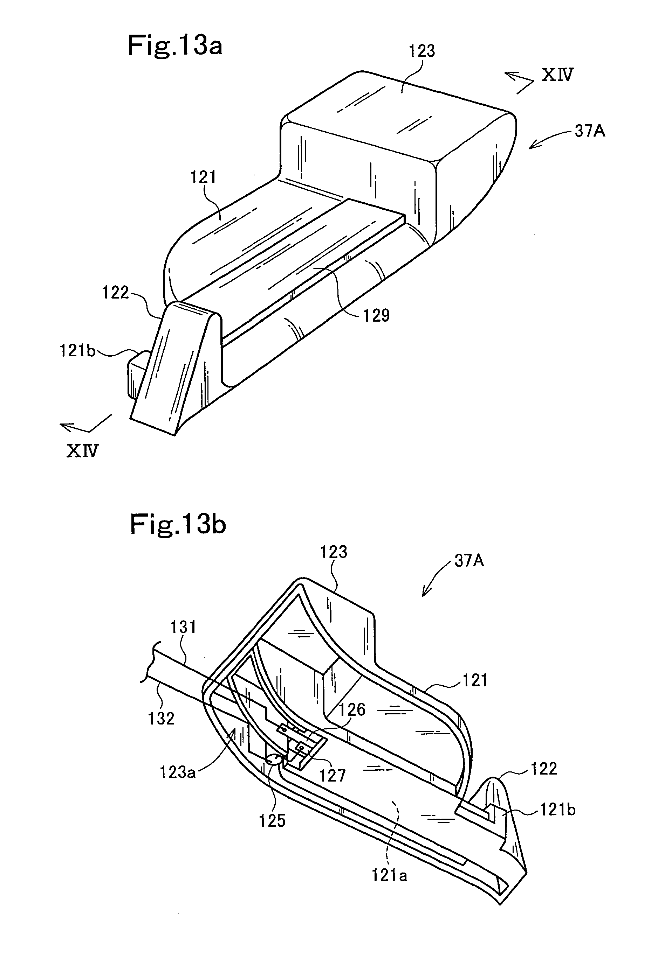

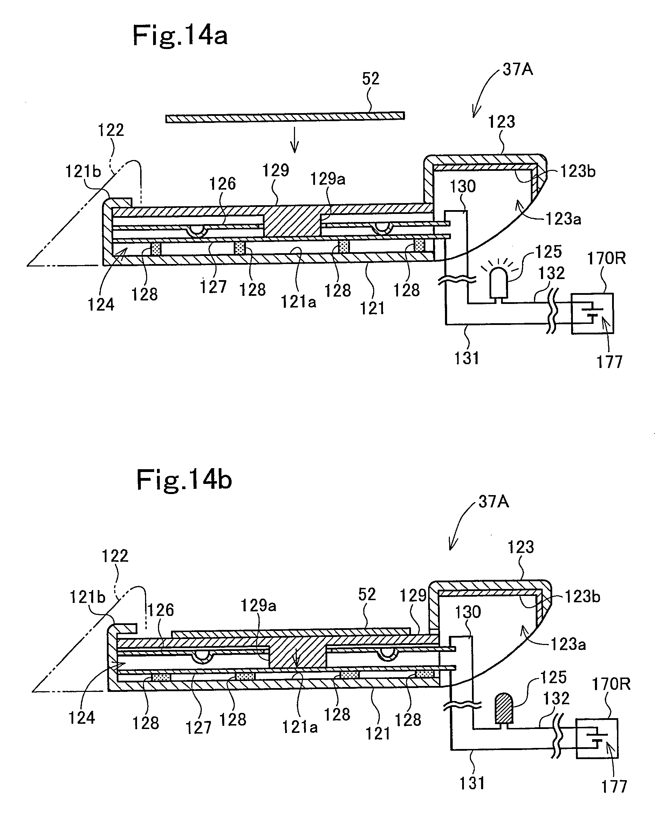

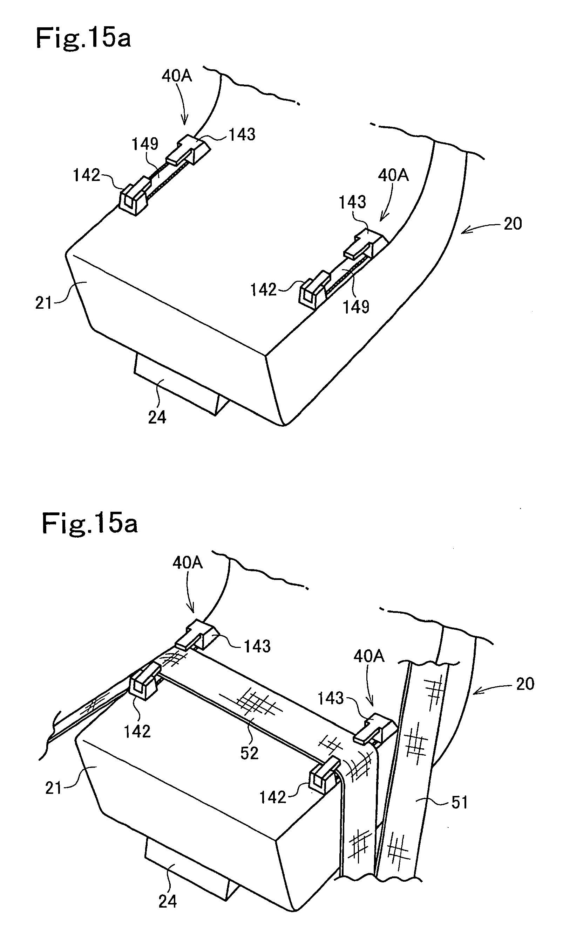

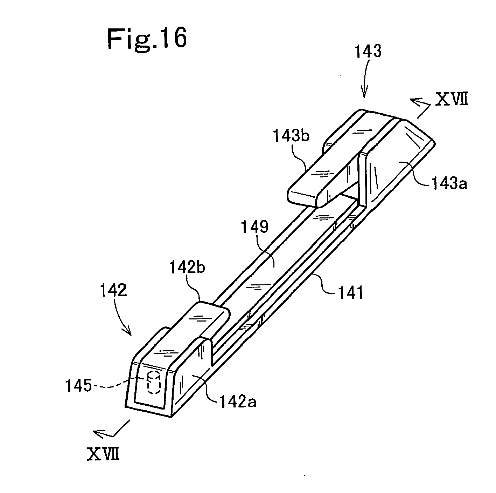

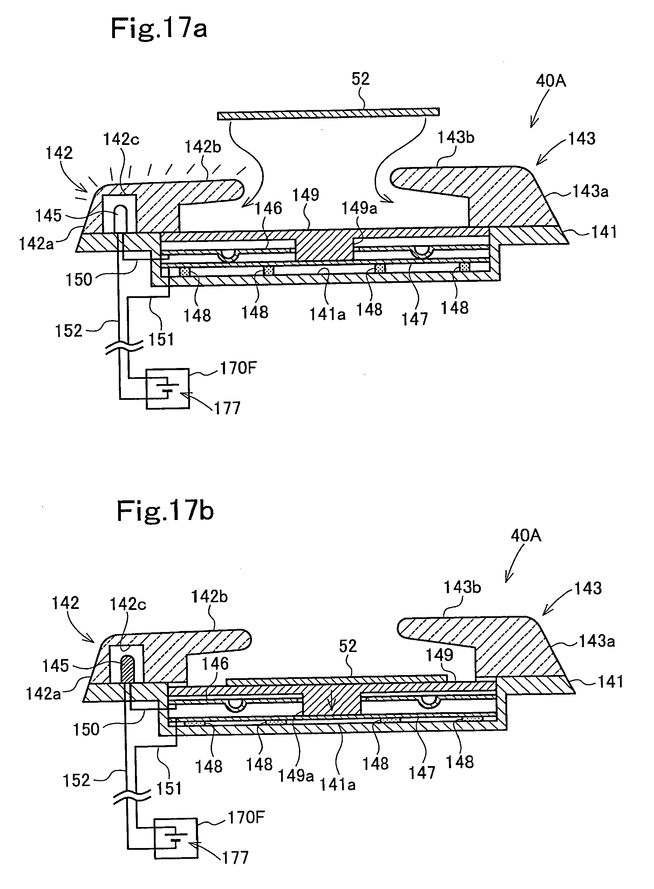

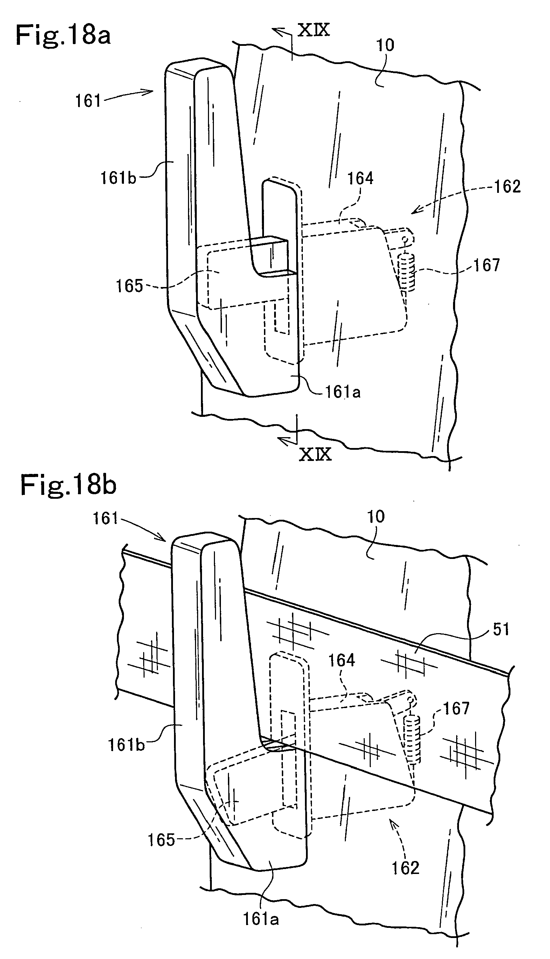

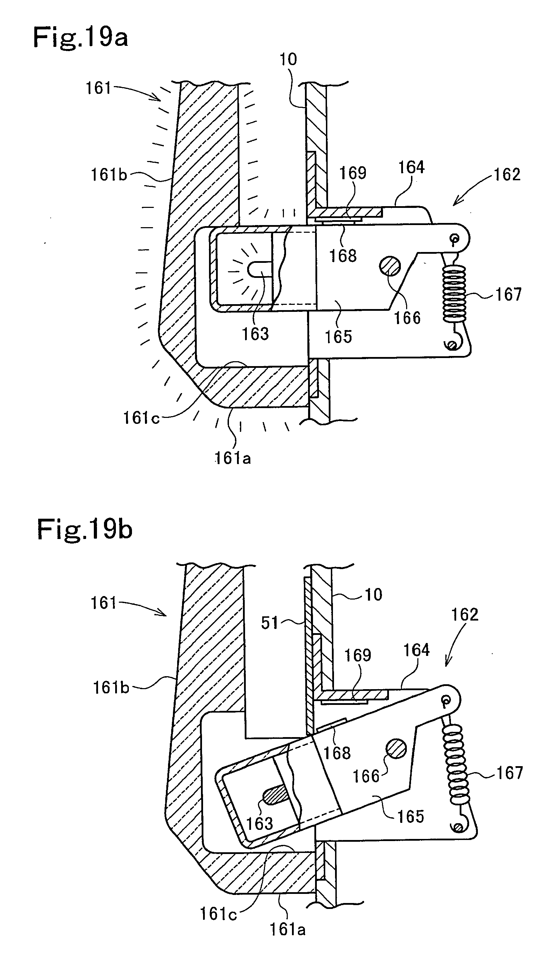

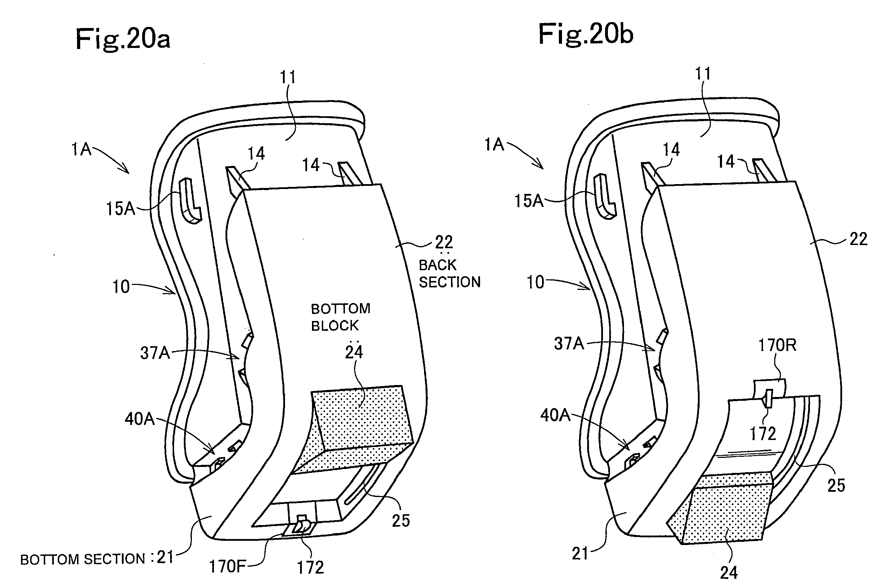

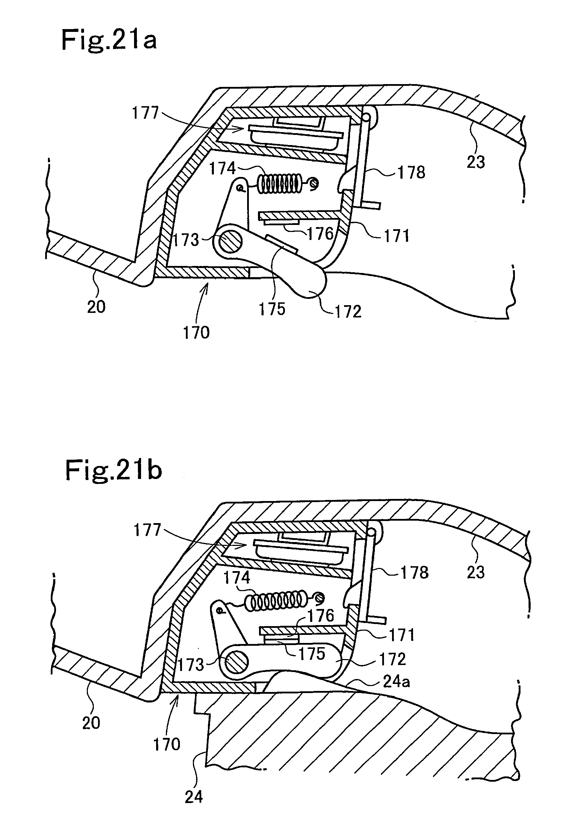

Fig. 8 is a perspective view of a child seat according to another embodiment, which is mounted so as to face forward. Fig. 9 is a perspective view of the child seat which is mounted so as to face rearward. Figs. 10a and 10b are a perspective view showing the upper back section of a base. Figs. 11a and 11b are a perspective view of a belt insertion member 30A. Figs. 12a and 12b are a cross-sectional view taken along line XII - XII of Fig. 11a. Figs. 13a and 13b are a perspective view of a belt insertion member 37A. Figs. 14a and 14b are a cross-sectional view taken along line XIV - XIV of Fig. 13a. Figs. 15a and 15b are a perspective view showing a bottom section of a base. Figs. 16a and 16b are a perspective view of a belt insertion member 40A. Figs. 17a and 17b are a cross-sectional view taken along line XVII - XVII of Fig. 16a. Figs. 18a and 18b are a perspective view of a belt hook portion 15A. Figs. 19a and 19b are a cross-sectional view taken along line XIX - XIX of Fig. 18a. Figs. 20a and 20b are a perspective view showing a rear side of a child seat body. Figs. 21a and 21b are a cross-sectional view taken along line XXI - XXI of Fig. 20a.

A child seat 1A according to another embodiment also has a child seat body 10 and a base 20 having the child seat body 10 reclinably mounted thereon. Engagement between the child seat body 10 and the base 20 is the same as that of the afore-mentioned embodiment.

The child seat body 10 according to this embodiment also has belt hook portions 15A provided at both upper right and left sides thereof, on which a shoulder belt 51 of a seatbelt 50 is adapted to be hooked when the child seat 1 is mounted so as to face rearward of the vehicle. The bottom section 21 of the base 20 has belt insertion members 40A provided at both upper right and left sides thereof, through which the lap belt 52 of the seatbelt 50 is inserted when the child seat 1 is mounted to face rearward. The back section 22 of the base 20 has belt insertion members 30A and 37A provided at the front upper right and left sides and the front lower right and left sides thereof, respectively, through which the shoulder belt 51 and the lap belt of the seatbelt 50 are inserted when the child seat 1 is mounted to face forward of the vehicle.

Each of the belt insertion members 30A located on the front upper surface of the back section 22 has a base plate 101 extending along the front surface of the back section 22, a downward facing, L-shaped hook portion 102 projecting from the base plate 101, a limit switch 103 for detecting that the shoulder belt 51 is inserted through the hook portion 102, and a LED 104 that lights up when the shoulder belt 51 is to be inserted through the belt insertion member 30A and goes out when the limit switch 103 detects the insertion of the shoulder belt 51 through the belt insertion member 30A.

The base plate 101 is a substantially rectangular plate-like component extending substantially vertically along the front surface of the back section 22. The hook portion 102 has a base end portion 102a extending forward from the front upper surface of the base plate 101 and an arm portion 102b extending vertically downward from the front end of the base end portion 102a so as to be in substantially parallel to the front surface of the base plate 101. The arm portion 102a has a guide piece 102c projecting from its surface opposed to the base plate 101 toward the base plate 101. The guide piece 102c extends substantially vertically and includes a substantially triangle-shaped component that heightens a projection toward the upper portion. The peak projection of the guide piece 102c from the arm portion 102b is configured to be smaller than a value obtained by subtracting the thickness of the shoulder belt 51 from the distance between the arm portion 102c and the base plate 101.

The base plate 101 has a lever insertion hole 101a provided in its region opposed to the guide piece 102c, through which a lever 106 of a limit switch 103 to be mentioned later is inserted. Also, the base plate 101 has a contact retention piece 101b provided at the back side thereof, which extends substantially vertically across the lever insertion hole 101a.

The base plate 101 has a box-shaped wall piece 101c provided at the back side thereof, which extends along the circumferential edge thereof. In the left belt insertion member 30A, the wall piece 101c is disposed in such a manner that its portion vertically extending along the left side of the base plate 101 extends along the left side of the back section 22. In the right belt insertion member 30A, the wall piece 101c is disposed in such a manner that its portion vertically extending along the right side of the base plate 101 extends along the right side of the back section 22. The portion of the wall piece 101c, extending along each of the right and left sides of the back section 22, is thereafter referred to as a vertical portion.

An LED 104 is provided in an opening (reference numeral omitted) formed in the vertical portion of the wall piece 101c. A window member 105 made of a light-permeable material, such as a transparent synthetic resin, is mounted outside the vertical portion of the wall piece 101c so as to cover the opening. The window member 105 extends till the forward edge of the wall piece 101c and has the front end surface thereof being substantially flush with the front surface of the base plate 101. As shown in Fig. 10a, a window hole (reference numeral omitted) into which the window member 105 fits is provided at each of the front right and left side of the back section 22. The window member 105 is exposed to the outside surface of the back section 22 through the window hole. When the LED 104 lights up, the light from the LED through the window member 105 is configured to be visible to the operator. The window member 105 is molded from a red-tinted or red-colored molding material.

The limit switch 103 is disposed at the back side of the base plate 101, which includes a lever 106 supported at the lower end thereof by a support shaft 107 so as to rotationally move in the forward and rearward directions, a spring 108 for urging the lever 106 to rotationally move forward, and a pair of contacts 109, 110.

The lever 106 is an L-shaped component having the upper end thereof bent forward. As shown in Fig. 12a, when the shoulder belt 51 is not inserted through the hook portion 102, the lever 106 rotationally moves forward due to the urging force of the spring 108 and its upper end projects from the front surface of the base plate 101 through the lever insertion hole 101a. This is thereafter referred to as a seatbelt non-insertion mode. The lever 106 has a substantially triangle-shaped or trapezoidal upper end that reduces its vertical width toward the front end. As shown in Fig. 12a, a projection of the lever 106 from the front surface of the base plate 101 in the seatbelt non-insertion mode is greater than a distance between the guide piece 102c and the front surface of the base plate 101 in this embodiment. As a result, the upper end of the lever 106 overlaps with the guide 102c in the seatbelt non-insertion mode.

As shown in Fig. 11b, the lever 106 is disposed so as to extend along the contact retention piece 101b. The lever 106 has one contact 109 at its surface opposed to the contact retention piece 101b, while the contact retention piece 101b has the other contact 110 at its surface opposed to the lever 106. The contact 110 (or 109) is connected to one terminal of the LED 104 through a lead wire 111, and the other contact 109 (or 110) and the other terminal of the LED 104 are connected with a power supply 177 of a rear limit switch 170R to be mentioned later through lead wires 112 and 113, respectively.

As shown in Fig. 12a, in the seatbelt non-insertion mode, the contacts 109, 110 come into contact with each other, thereby energizing the LED 104.

As shown in Fig. 12b, if the shoulder belt 51 is inserted through the hook portion 102, the shoulder belt 51 entering into a space between the arm portion 102b of the hook portion 102 and the base plate 101 presses the upper end of the lever 106, causing the lever 106 to rotationally move rearward. At this time, the contacts 109, 110 are out of contact with each other, de-energizing the LED 104.

The back section 22 has an upward-facing, step-like portion formed at the lower portion thereof, and the belt insertion members 37A are provided at both right and left sides of the step-like portion.

The belt insertion member 37A has a base plate 121 extending along the upper surface of the upward facing, step-like portion thereof, a front projecting portion 122 upstanding from the front end of the base plate 121, a rear projecting portion 123 upstanding from the rear end of the base plate 121, a limit switch 124 for detecting that the lap belt 52 is inserted through the belt insertion member 37A, and an LED 125 that lights up when the lap belt is to be inserted through the belt insertion member 37A and goes out when the limit switch 124 detects the insertion of the lap belt 52 through the belt insertion member 37A.

The lap belt 52 is passed through a space between the front projecting portion 122 and the rear projecting portion 123. A recessed portion 121a extending substantially in the forward and rearward directions is formed on the upper surface of the base plate 121 between the projecting portions 122, 123. The limit switch 124 is mounted inside the recessed portion 121a. The recessed portion 121a has a switch plate retention portion 121b provided at the front end thereof, which supports the front end of the switch plate 129 to be mentioned later so as to be vertically movable. The rear projecting portion 123 is a hollow portion having a chamber 123a formed therein, and the rear end of the recessed portion 121a communicates with the chamber 123a inside the rear projecting portion 123. The chamber 123a has an LED 125 disposed therein.

In this embodiment, the base plate 121 and the projecting portions 122, 123 are formed in an integral manner of a light-permeable material, such as transparent or semi-transparent synthetic resin. For this reason, the belt insertion member 37A becomes bright substantially in its entirety when the LED 125 lights up inside the chamber 123a. The base plate 121 and the projecting portions 122, 123 are molded from a red-tinted or red-colored molding material.

The limit switch 124 has first and second contact plates 126, 127, an urging member 128 for urging the second contact plate 127 to move closer to the first contact plate 126, and a switch plate 129 for moving the second contact plate 127 away from the first contact plate 126.

The first contact plate 126 is secured in the recessed portion 121a so as to be isolated above the bottom surface of the recessed portion 121a and be vertically horizontally immovable. The second contact plate 127 is disposed below the first contact plate 126 so as to be vertically movable. The urging member 128 is disposed between the second contact plate 127 and the bottom surface of the recessed portion 121a. The urging member 128 is made of, for example, an elastically deformable material such as a rubber, and is disposed between the second contact plate 127 and the bottom surface of the recessed portion 121a in a pressed state (or in a compressed state).

One contact plate 126 (or 127) is connected to one of the terminals of the LED 125 through a lead wire 130, and the other contact plate 127 (or 126) and the other terminal of the LED 125 are connected through lead wires 131 and 132, respectively, to a power supply 177 of a rear limit switch 170R to be mentioned later.

The switch plate 129 is disposed above the first contact plate 126. The switch plate 129 is supported at the leading end thereof by the switch plate retention portion 121b so as to be vertically movable, and is engaged at the trailing end thereof with an opening (reference numeral omitted) through which the recessed portion 121a and the chamber 123a communicate with each other. Reference numeral 123b refers to a stopper for preventing the switch plate 129 embedded in the chamber 123a from going out of the recessed portion 121a. The switch plate 129 has a projection 129a projecting from the lower surface thereof for pressing downward the second contact plate 127. As shown in Figs. 14a, 14b, the first contact plate 126 has a projection through-hole (reference numeral omitted) formed therein, through which the projection 129a contacts with the upper surface of the second contact plate 127. The projecting height of the projection 129a below the lower surface of the switch plate 129 is configured to be greater than the thickness of the first contact plate 126.

As shown in Fig. 14a, in the seatbelt non-insertion mode the second contact plate 127 is pushed upward by the urging member 128 so as to contact with the first contact plate 126, thereby energizing the LED 125. The switch plate 129 is also pushed upward by the second contact plate 127 with the projection 129a therebetween so as to be isolated above the first contact plate 126. At this time, the switch plate 129 hangs over the upper surface of the base plate 121.

As shown in Fig. 14b, when the lap belt 52 is inserted between the projection portions 122, 123 and is laid over the base plate 121, the lap belt 52 is configured to depress the switch plate 129. As the switch plate 129 goes down, the switch plate 129 also presses down the second contact plate 127 with the projection 129a therebetween, which causes the second contact plate 127 to move away from the first contact plate 126, thereby de-energizing the LED 125.

Each of belt insertion members 40A provided on the upper surface of the bottom section 21 includes a base plate 141 extending along the upper surface of the bottom section 21, a front hook portion 142 provided at the front end of the base plate 141, a rear hook portion 143 provided at the rear end of the base plate 121, a limit switch 144 for detecting that the lap belt 52 is inserted through the belt insertion member 40A, and a LED 145 that lights up when the lap belt is to be inserted through the belt insertion member 40A and goes out when the limit switch 144 detects the insertion of the lap belt 52 through the belt insertion member 40A.

The base plate 141 is a substantially rectangular-shaped member that extends in the forward and rearward directions. The front hook portion 142 has a base end portion 142a extending upward from the front end of the base plate 141 and an arm portion 142b extending rearward from the upper end of the base end portion 142a. In this embodiment, the section between the upper end of the base end portion 142a and the arm portion 142b in the front hook portion 142 is composed of a light-permeable material such as a transparent synthetic resin, and the LED 145 is placed inside a vacant chamber 142c provided in the section. Accordingly, when the LED 145 lights up, the above-mentioned transparent section of the front hook portion 142 becomes bright. The transparent section of the front hook portion 142 is formed of a blue-tinted or blue-colored forming material. The rear hook portion 143 has a base end portion 143a extending upward from the rear end of the base plate 141 and an arm portion 143b extending forward from the upper end of the base end portion 143a. The lap belt 52 is guided at the leading edge thereof by the front hook portion 142 and at the trailing edge thereof by the rear hook portion 143 when inserted through them.

A recessed portion 141a extending substantially in the forward and rearward directions is formed on the upper surface of the base plate 141 between the hook portions 142, 143. The limit switch 144 is disposed inside the recessed portion 141a. The structure of the limit switch 144 is the same as that of the limit switch 124 of the belt insertion member 37A described above.

In other words, the limit switch 144 in the belt insertion member 40A also has first and second contact plates 146, 147, an urging member 148 for urging the second contact plate 147 to move closer to the first contact plate 146, and a switch plate 149 for moving the second contact plate 147 away from the first contact plate 146.

The first contact plate 146 is secured in the recessed portion 141a so as be isolated above the bottom surface of the recessed portion 141a and be vertically horizontally immovable. The second contact plate 147 is disposed below the first contact plate 146 so as to be vertically movable. The urging member 148 is disposed in a pressed state (or in a compressed state) between the second contact plate 147 and the bottom surface of the recessed portion 141a.

One contact plate 146 (or 147) is connected to one of the terminals of the LED 145 through a lead wire 150, and the other contact plate 147 (or 146) and the other terminal of the LED 145 are connected through lead wires 151 and 152, respectively, to a power supply 177 of a front limit switch 170F to be mentioned later.

The switch plate 149 is disposed above the first contact plate 146 so as to be vertically movable. As shown in Figs. 17a, 17b, in this embodiment the lower ends of the base end portions 142a, 143a in the hook portions 142, 143 hang over the recessed portion 141a, and the switch plate 149 is retained at the front and rear ends thereof by the base end portions 142a, 143a so as to be placed inside the recessed portion 141a. The switch plate 149 has a projection 149a projecting from the lower surface thereof for pressing downward the second contact plate 147. As shown in Figs. 17a, 17b, the first contact plate 146 has a projection through-hole (reference numeral omitted) formed therein, through which the projection 149a contacts with the upper surface of the second contact plate 147. The projecting height of the projection 149a below the lower surface of the switch plate 149 is configured to be greater than the thickness of the first contact plate 146.

As shown in Fig. 17a, in the seatbelt non-insertion mode the second contact plate 147 is pushed upward by the urging member 148 so as to contact with the first contact plate 146, thereby energizing the LED 145. The switch plate 149 is also pushed upward by the second contact plate 147 with the projection 149a therebetween so as to be isolated above the first contact plate 146. At this time, the switch plate 149 hangs over the upper surface of the base plate 141.

As shown in Fig. 17b, when the lap belt 52 is inserted between the front hook portions 142 and the rear hook portion 143 and is laid over the base plate 141, the lap belt 52 is configured to depress the switch plate 149. As the switch plate 149 goes down, the switch plate 149 also presses down the second contact plate 147 with the projection 149a therebetween, which causes the second contact plate 147 to move away from the first contact plate 146, thereby de-energizing the LED 145.

Each of belt hook portions 15A provided on the right and left sides of the child seat body 10 has a L-shaped hook portion 161 when viewed in side, a limit switch 162 for detecting that the shoulder belt 51 is inserted through the belt hook portion 15A, and an LED 163 that lights up when the shoulder belt is to be inserted through the belt hook portion 15A and goes out when the limit switch 162 detects the insertion of the shoulder belt 51 through the belt hook portion 15A.

The hook portion 161 has a base end portion 161a extending sideward from the side of the child seat body 10 and an upstanding portion 161b standing upward from the end of the base end portion 161a. As shown in Figs. 19a, 19b, a vacant portion 161c for housing a lever 170 of the limit switch 162 to be mentioned later is formed approximately in the middle across the thickness (in the front and rear directions) of the base end portion 161a and the upstanding portion 161b. The vacant portion 161c extends substantially vertically. The vacant portion 161c is continuously open to the end face of the base end portion 161a at the side of the child seat body 10, the upper surface of the base end portion 161a, and the side close to the lower end of the upstanding portion 161b at the side of the child seat body 10.

The limit switch 162 has a switch boxy 164 embedded in the side of the child seat body 10, a lever 165 that is supported at the proximal end thereof by a support shaft 166 in the switch box 164 so as to be rotationally move in the upward-and-downward directions and extends at the distal end thereof into the vacant portion 161c from the switch box 164, a spring 167 for urging the lever 165 to rotationally move in the upward direction, and a pair of contacts 168, 169. The distal end of the lever 165 is configured to be vertically movable in the vacant portion 161c. The contact 168 is installed on the upper surface of the lever 165, while the contact 169 is installed on the ceiling surface of the switch box 164, opposed to the upper surface of the lever 165. One of the contacts 168, 169 is connected to one of the terminals of the LED 163 through a lead wire (not illustrated), while the other of the contacts 168, 169 and the other terminal of the LED 163 are connected to the power supply 177 of a front limit switch 170R to be mentioned later through lead wires (not illustrated).

As shown in Fig. 19a, in the belt non-insertion mode, the lever 165 extends substantially horizontally at the distal end thereof due to an urging force of the spring 167. At this time, the distal end of the lever 156 hangs over the base end portion 161a, as shown in Fig. 18a. Also, at this time the contacts 168, 169 are in contact with each other, thereby energizing the LED 163.

As shown in Figs. 19a and 19b, the LED 163 is provided at the distal end of the lever 165. In this embodiment, the distal end of the lever 165 is made of a light-permeable material such as a transparent synthetic resin, and the LED 163 is disposed inside the distal end that is transparent. In this embodiment, the hook portion 161 is also made in its entirety of a light-permeable material such as a transparent synthetic resin. Accordingly, when the LED 163 lights up, the distal end of the lever 165 and the entire hook portion 161 become bright. The distal end of the lever 165, which is transparent, and the hook portion 161 are molded of a blue-tinted or blue-colored molding material.

As shown in Figs. 18b and 19b, when the shoulder belt 51 is hooked on the hook portion 161, the shoulder belt 51 is configured to press down the distal end of the lever 165, causing the distal end to rotationally move downward. As the lever 165 rotationally moves downward, the contacts 168, 169 move away from each other, thereby de-energizing the LED 163.

In this embodiment, a rear limit switch 170R for detecting that the bottom block 24 is located at the rearmost position in the recessed portion 23 is provided at the rear end side of the recessed portion 23 formed on the rear surface of the base 20. Also, a front limit switch 170F for detecting that the bottom block 24 is located at the foremost position in the recessed portion 23 is provided at the front end side of the recessed portion 23. The limit switches 170R, 170F has substantially the same structure, except that their orientations are opposite to each other. They are hereinafter referred to collectively as a limit switch 170.

The limit switch 170 has a switch box 171 disposed at the rear end or the front end of the recessed portion 23, a lever 172 that is supported at the proximal end thereof by a support shaft 173 in the switch box 171 so as to be rotationally move in the upward-and-downward directions and extends at the distal end thereof downward from the switch box 171, a spring 174 for urging the lever 172 to rotationally move in the downward direction, and a pair of contacts 175, 176. The contact 175 is installed on the upper surface of the lever 172, while the contact 176 is installed in the switch box at the region opposed to the lever 172. As shown in Fig. 21a, when the lever 172 extends below the switch box 171, the contacts 175, 176 are out of contact with each other.

As shown in Fig. 21b, the bottom block 24 has a projecting portion 24a formed on the upper surface of the rear end thereof, which comes into contact with and pushes up the lever 172 of the rear switch box 170R when the bottom block 24 is moved to the rearmost position in the recessed portion 23. The bottom block 24 also has a projecting portion 24a (not illustrated) formed on the upper surface of the front end thereof, which comes into contact with and pushes up the lever 172 of the rear switch box 170F when the bottom block 24 is moved to the foremost position in the recessed portion 23. If the lever 172 is pushed up by the projecting portion 24a of the bottom block 24, the contacts 175, 176 come into contact with each other, resulting in energization.

In this embodiment, a power supply 177 is built in the limit switch 170 to illuminate the LEDs 104, 125, 145, and 163. In this embodiment, a battery is provided as the power supply 177. Reference numeral 178 refers to an openable lid provided on an opening through which the battery is installed or removed. The configuration of the power supply for illuminating the LEDs 104, 125, 145, and 163 is not limited to this. For example, the power supply 177 may be provided for each of the LEDs 104, 125, 145, and 163 (namely, for each of the belt insertion members 30A, 37A, 40A and the belt hook portion 15A).

As described above, the LEDs 104, 125 for the belt insertion members 30A, 37A are connected to the power supply 177 of the rear limit switch 170R. Also, the LEDs 145, 163 for the belt insertion member 40A and the belt hook portion 15A are connected to the power supply 177 of the front limit switch 170R.

The other structure of the child seat 1A is the same as those of the afore-mentioned child seat 1 in Figs. 1 through 7. The same reference numerals in Figs. 8 through 21 as those in Figs. 1 through 7 refer to the same components.

When the child seat 1A is mounted so as to face forward, the bottom block 24 is moved to the rearmost position in the recessed portion 23. As a result, the projecting portion 24a located at the rear of the bottom block 24 pushes up the lever 172 of the rear limit switch 170R, which causes the contacts 175, 176 to come into contact with each other, causing the power supply 177 to energize and illuminate the LEDs 104, 125. This allows the operator to determine that the seatbelt 50 should be inserted through the belt insertion members 30A, 37A. Upon insertion of the shoulder belt 51 through the belt insertion member 30A and insertion of the lap belt 52 through the belt insertion member 37A, the limit switches 103, 124 detect such insertion, deactivating the LEDs 104, 125, as described above.

When the child seat 1A is mounted so as to face rearward, the bottom block 24 is moved to the foremost position in the recessed portion 23. As a result, the projecting portion 24a located at the front of the bottom block 24 pushes up the lever 172 of the rear limit switch 170F, which causes the contacts 175, 176 to come into contact with each other, causing the power supply 177 to energize and illuminate the LEDs 145, 163. This allows the operator to determine that the seatbelt 50 should be inserted through the belt insertion member 40A and the belt hook portion 15A. Upon insertion of the lap belt 52 through the belt insertion member 40A and insertion of the shoulder belt 51 through the belt hook portion 15A, the limit switches 144, 162 detect such insertion, deactivating the LEDs 145, 163, as described above.

As shown in Figs. 8 and 9, the way of passing the seatbelt 50 through the child seat 1A mounted so as to face forward or rearward is the same as those for the afore-mentioned child seat 1 in Figs. 1 through 7.

The above embodiment is one example of the present invention, and an embodiment other than shown above is conceivable within the scope of the present invention.

## Claims

1. A child seat (1, 1A) that has a plurality of belt insertion members (37, 40, 40A, 37A, 30A, 30) and is mounted on a motor vehicle seat by causing a seatbelt (50) of the motor vehicle to pass through the belt insertion members (37, 37A, 40, 40A, 30A, 30),
**characterized in that**
the child seat (1, 1A) has a light emitter (34, 39, 42, 104, 125, 145, 163) that lights up to indicate the belt insertion members (37, 37A, 40, 40A, 30A, 30) through which the seatbelt (50) is to be inserted when an attempt is made to mount the child seat (1, 1A) on the motor vehicle seat, and
the child seat (1, 1A) comprises child seat orientation detection means (170) for detecting whether the child seat (1, 1A) faces forward or rearward, wherein the belt insertion member (30, 30A, 37, 37A, 40, 40A) includes a forward facing installation belt insertion member (30, 30A, 37, 37A, 40, 40A) through which the seatbelt (50) is inserted when the child seat (1, 1A) is mounted so as to face forward and a rearward facing installation belt insertion member (30, 30A, 37, 37A, 40, 40A) through which the seatbelt (50) is inserted when the child seat (1, 1A) is mounted so as to face rearward, and wherein either the light emitter (34, 39, 42, 104, 125, 145, 163) on the forward facing installation belt insertion member (30, 30A, 37, 37A, 40, 40A) or the light emitter (34, 39, 42, 104, 125, 145, 163) on the rearward facing installation belt insertion member (30, 30A, 37, 37A, 40, 40A) is configured to light up according to the orientation of the child seat (1, 1A) detected by the child seat orientation detection means (170).

2. The child seat (1, 1A) according to Claim 1, wherein each of the belt insertion members (37, 37A, 40, 40A, 30A, 30) has a belt detector and, when the belt detector detects the presence of the seatbelt (50), the light emitter (34, 39, 42, 104, 125, 145, 163) on that belt insertion member (37, 37A, 40, 40A, 30A, 30) goes out.

3. The child seat (1, 1A) according to Claim 2, wherein the belt detector is a limit switch (27, 33, 38, 41, 103, 124, 144, 162, 170) provided so as to come into contact with the belt insertion member (37, 37A, 40, 40A, 30A, 30) which is inserted through the belt insertion member (37, 37A, 40, 40A, 30A, 30).

4. The child seat (1, 1A) according to Claim 2 or Claim 3, further comprising control means that controls the light emitter (34, 39, 42, 104, 125, 145, 163) in such a manner that in the first step the light emitter (34, 39, 42, 104, 125, 145, 163) on a first belt insertion member (30, 30A, 37, 37A, 40, 40A) through which the seatbelt (50) is to be inserted is caused to light up and then go out when the belt detector on the first belt insertion member (30, 30A, 37, 37A, 40, 40A) detects that the seatbelt (50) has been inserted through the first belt insertion member (30, 30A, 37, 37A, 40, 40A), and in the second step the light emitter (34, 39, 42, 104, 125, 145, 163) on the second belt insertion member (30, 30A, 37, 37A, 40, 40A) through which the seatbelt (50) is to be inserted is caused to light up and then go off when the belt detector on the second belt insertion member (30, 30A, 37, 37A, 40, 40A) detects that the seatbelt (50) has been inserted through the second belt insertion member (30, 30A, 37, 37A, 40, 40A) and a start switch for causing the control means to start control operation.

5. The child seat (1, 1A) according to any one of Claims 1-4, wherein the light emitter (34, 39, 42, 104, 125, 145, 163) provided on the forward facing installation belt insertion member (30, 30A, 37, 37A, 40, 40A) is different in light color from the light emitter (34, 39, 42, 104, 125, 145, 163) provided on the rearward facing installation belt insertion member (30, 30A, 37, 37A, 40, 40A).

6. The child seat (1, 1A) according to Claim 5, wherein the light emitter (34, 39, 42, 104, 125, 145, 163) provided on the forward facing installation belt insertion member (30, 30A, 37, 37A, 40, 40A) has red-colored light emission, and the light emitter (34, 39, 42, 104, 125, 145, 163) provided on the rearward facing installation belt insertion member (30, 30A, 37, 37A, 40, 40A) has blue-colored light emission.

7. The child seat (1, 1A) according to any one of Claims 1-6, wherein the child seat (1, 1A) is provided at the bottom thereof with a bottom block (24) which is movable at the bottom so as to take a rearward location whether the child seat (1, 1A) is mounted to face forward or rearward, and wherein the child seat orientation detection means (170) detects the orientation of the child seat (1, 1A) on the basis of the location of the bottom block (24).

8. The child seat (1, 1A) according to any one of Claims 1-4, further comprising a base section (20) that is mounted on the motor vehicle seat and a child seat body (10) supported so as to be reclinable in relation to the base section (20), wherein the child seat orientation detection means detects the orientation of the child seat (1, 1A) on the basis of a reclining angle of the child seat body (10).

9. The child seat (1, 1A) according to any one of Claims 1-8, further comprising a child webbing for restraining a child seated on the child seat (1, 1A), a tongue (53, 62) provided at the end of the child webbing, a buckle (54, 63) having an insertion slot into which the tongue (53, 62) is inserted, a tongue sensor for detecting that the insertion of the tongue (53, 62) into the insertion slot is completed, an insertion slot light emitter (34, 39, 42, 104, 125, 145, 163) provided on the insertion slot, a seating sensor for detecting that a child is seated in the child seat (1, 1A), and control means that turns on the insertion slot light emitter (34, 39, 42, 104, 125, 145, 163) when the seating sensor detects that a child is seated and then turns off the insertion slot light emitter (34, 39, 42, 104, 125, 145, 163) when the tongue sensor detects the insertion of the tongue (53, 62).

10. The child seat (1, 1A) according to any one of Claims 1-9, wherein illumination of the light emitter (34, 39, 42, 104, 125, 145, 163) is provided in the form of flashing.

## Patentansprüche

1. Kindersitz (1, 1A), welcher mehrere Gurteinführungsteile (37, 40, 40A, 37A, 30A, 30) aufweist und auf einem Kraftfahrzeug-Sitz angebracht wird, indem veranlasst wird, dass ein Sitzgurt (50) des Kraftfahrzeugs durch die Gurteinführungsteile (37, 37A, 40, 40A, 30A, 30) hindurchgeführt wird,
**dadurch gekennzeichnet,**
**dass** der Kindersitz (1, 1A) eine Lichtemissionsquelle (34, 39, 42, 104, 125, 145, 163) aufweist, welche aufleuchtet, um die Gurteinführungsteile (37, 37A, 40, 40A, 30A, 30) anzuzeigen, durch welche der Sitzgurt (50) einzuführen ist, wenn ein Versuch unternommen wird, um den Kindersitz (1, 1A) auf dem Kraftfahrzeug-Sitz anzubringen, und
**dass** der Kindersitz (1, 1A) Kindersitz-Ausrichtungserfassungsmittel (170) umfasst, um zu erfassen, ob der Kindersitz (1, 1A) vorwärts oder rückwärts ausgerichtet ist, wobei das Gurteinführungsteil (30, 30A, 37, 37A, 40, 40A) aufweist ein vorwärts ausrichtendes Einbau-Gurteinführungsteil (30, 30A, 37, 37A, 40, 40A), durch welches der Sitzgurt (50) eingeführt wird, wenn der Kindersitz (1, 1A) angebracht wird, um vorwärts ausgerichtet zu sein, und ein rückwärts ausrichtendes Einbau-Gurteinführungsteil (30, 30A, 37, 37A, 40, 40A), durch welches der Sitzgurt (50) eingeführt wird, wenn der Kindersitz (1, 1A) angebracht wird, um rückwärts ausgerichtet zu sein, und wobei entweder die Lichtemissionsquelle (34, 39, 42, 104, 125, 145, 163) auf dem vorwärts ausrichtenden Einbau-Gurteinführungsteil (30, 30A, 37, 37A, 40, 40A) oder die Lichtemissionsquelle (34, 39, 42, 104, 125, 145, 163) an dem rückwärts ausrichtenden Einbau-Gurteinführungsteil (30, 30A, 37, 37A, 40, 40A) ausgestaltet ist, um entsprechend der Ausrichtung des Kindersitzes (1, 1A), welcherdurch die Kindersitz-Ausrichtungserfassungsmittel (170) erfasst wird, aufzuleuchten.

2. Kindersitz (1, 1A) nach Anspruch 1, wobei jedes der Gurteinführungsteile (37, 37A, 40, 40A, 30A, 30) einen Gurtdetektor aufweist, und wobei, wenn der Gurtdetektor das Vorhandensein des Sitzgurtes (50) erfasst, die Lichtemissionsquelle (34, 39, 42, 104, 125, 145, 163) auf diesem Gurteinführungsteil (37, 37A, 40, 40A, 30A, 30) ausgeht.

3. Kindersitz (1, 1A) nach Anspruch 2, wobei der Gurtdetektor ein Endschalter (27, 33, 38, 41, 103, 124, 144, 162, 170) ist, welcher vorhanden ist, um mit dem Gurteinführungsteil (37, 37A, 40, 40A, 30A, 30) in Kontakt zu kommen, welches durch das Gurteinführungsteil (37, 37A, 40, 40A, 30A, 30) eingeführt wird.

4. Kindersitz (1, 1A) nach Anspruch 2 oder Anspruch 3, darüber hinaus umfassend Steuermittel, welche die Lichtemissionsquelle (34, 39, 42, 104, 125, 145, 163) in solch einer Weise steuern, dass in dem ersten Schritt die Lichtemissionsquelle (34, 39, 42, 104, 125, 145, 163) auf einem ersten Gurteinführungsteil (30, 30A, 37, 37A, 40, 40A), durch welchen der Sitzgurt (50) einzuführen ist, veranlasst wird, aufzuleuchten und dann auszugehen, wenn der Gurtdetektor auf dem ersten Gurteinführungsteil (30, 30A, 37, 37A, 40, 40A) erfasst, dass der Sitzgurt (50) durch das erste Gurteinführungsteil (30, 30A, 37, 37A, 40, 40A) eingeführt worden ist, und dass in dem zweiten Schritt die Lichtemissionsquelle (34, 39, 42, 104, 125, 145, 163) auf dem zweiten Gurteinführungsteil (30, 30A, 37, 37A, 40, 40A), durch welches der Sitzgurt (50) einzuführen ist, veranlasst wird, aufzuleuchten und dann auszugehen, wenn der Gurtdetektor auf dem zweiten Gurteinführungsteil (30, 30A, 37, 37A, 40, 40A) erfasst, dass der Sitzgurt (50) durch dieses zweite Gurteinführungsteil (30, 30A, 37, 37A, 40, 40A) eingeführt worden ist, und einen Startschalter, um zu veranlassen, dass die Steuermittel einen Steuervorgang starten.

5. Kindersitz (1, 1A) nach einem der Ansprüche 1-4, wobei die Lichtemissionsquelle (34, 39, 42, 104, 125, 145, 163), welche auf dem vorwärts ausrichtenden Einbau-Gurteinführungsteil (30, 30A, 37, 37A, 40, 40A) vorhanden ist, bezüglich einer Lichtfarbe unterschiedlich zu der Lichtemissionsquelle (34, 39, 42, 104, 125, 145, 163), welche auf dem rückwärts ausrichtenden Einbau-Gurteinführungsteil (30, 30A, 37, 37A, 40, 40A) vorhanden ist, ist.

6. Kindersitz (1, 1A) nach Anspruch 5, wobei die Lichtemissionsquelle (34, 39, 42, 104, 125, 145, 163), welche auf dem vorwärts ausrichtenden Einbau-Gurteinführungsteil (30, 30A, 37, 37A, 40, 40A) vorhanden ist, eine rotfarbige Lichtstrahlung aufweist, und wobei die Lichtemissionsquelle (34, 39, 42, 104, 125, 145, 163), welche auf dem rückwärts ausrichteten Einbau-Gurteinführungsteil (30, 30A, 37, 37A, 40, 40A) vorhanden ist, eine blaufarbige Lichtstrahlung aufweist.

7. Kindersitz (1, 1A) nach einem der Ansprüche 1-6, wobei der Kindersitz (1, 1A) an dem Boden davon mit einem Bodenblock (24) vorhanden ist, welcher auf dem Boden bewegbar ist, um an einer rückwärtigen Stelle angeordnet zu werden, wenn der Kindersitz (1, 1A) angebracht wird, um vorwärts oder rückwärts ausgerichtet zu sein, und wobei die Kindersitz-Ausrichtungserfassungsmittel (170) die Ausrichtung des Kindersitzes (1, 1A) abhängig von der Stelle des Bodenblockes (24) erfassen.

8. Kindersitz (1, 1A) nach einem der Ansprüche 1-4, darüber hinaus umfassend einen Basisabschnitt (20), welcher auf dem Kraftfahrzeugsitz angebracht ist, und einen Kindersitzkörper (10), welcher gehalten ist, um bezüglich des Basisabschnitts (20) zurücklehnbar zu sein, wobei die Kindersitz-Ausrichtungserfassungsmittel die Ausrichtung des Kindersitzes (1, 1A) abhängig von einem Neigungswinkel des Kindersitzkörpers (10) erfassen.

9. Kindersitz (1, 1A) nach einem der Ansprüche 1-8, darüber hinaus umfassend einen Kindergurt, um ein Kind zurückzuhalten, welches auf dem Kindersitz (1, 1A) sitzt, eine Zunge (53, 62), welche an dem Ende des Kindergurtes vorhanden ist, ein Gurtschloss (54, 63), welches einen Einführungsschlitz aufweist, in welchen die Zunge (53, 62) eingeführt wird, einen Zungensensor, um zu erfassen, dass die Einführung der Zunge (53, 62) in den Einführungsschlitz abgeschlossen ist, eine Einführungsschlitz-Lichtemissionsquelle (34, 39, 42, 104, 125, 145, 163), welche an dem Einführungsschlitz vorhanden ist, einen Sitzsensor, um zu erfassen, dass ein Kind in den Kindersitz (1, 1A) gesetzt wird, und Steuermittel, welche die Einführungsschlitz-Lichtemissionsquelle (34, 39, 42, 104, 125, 145, 163) einschalten, wenn der Sitzsensor erfasst, dass ein Kind gesetzt wird, und welche die Einführungsschlitz-Lichtemissionsquelle (34, 39, 42, 104, 125, 145, 163) ausschalten, wenn der Zungensensor die Einführung der Zunge (53, 62) erfasst.

10. Kindersitz (1, 1A) nach einem der Ansprüche 1-9, wobei die Beleuchtung der Lichtemissionsquelle (34, 39, 42, 104, 125, 145, 163) in der Form eines Blinkens vorhanden ist.

## Revendications

1. Siège pour enfant (1, 1A) qui a une pluralité d'éléments d'insertion de ceinture (37, 40, 40A, 37A, 30A, 30) et est monté sur un siège de véhicule à moteur en provoquant le passage d'une ceinture de sécurité (50) du véhicule à moteur à travers les éléments d'insertion de ceinture (37, 37A, 40, 40A, 30A, 30),
**caractérisé en ce que** :
le siège pour enfant (1, 1A) a un émetteur de lumière (34, 39, 42, 104, 125, 145, 163) qui s'allume pour indiquer les éléments d'insertion de ceinture (37, 37A, 40, 40A, 30A, 30) à travers lesquels la ceinture de sécurité (50) doit être insérée lorsque l'on fait une tentative de monter le siège pour enfant (1, 1A) sur le siège du véhicule à moteur, et
le siège pour enfant (1, 1A) comprend des moyens de détection d'orientation de siège pour enfant (170) pour détecter si le siège pour enfant (1, 1A) est orienté vers l'avant ou vers l'arrière, dans lequel l'élément d'insertion de ceinture (30, 30A, 37, 37A, 40, 40A) comprend un élément d'insertion de ceinture d'installation orienté vers l'avant (30, 30A, 37, 37A, 40, 40A) à travers lequel la ceinture de sécurité (50) est insérée lorsque le siège pour enfant (1, 1A) est monté afin d'être orienté vers l'avant et un élément d'insertion de ceinture d'installation orienté vers l'arrière (30, 30A, 37, 37A, 40, 40A) à travers lequel la ceinture de sécurité (50) est insérée lorsque le siège pour enfant (1, 1A) est monté afin d'être orienté vers l'arrière, et dans lequel soit l'émetteur de lumière (34, 39, 42, 104, 125, 145, 163) sur l'élément d'insertion de ceinture d'installation orienté vers l'avant (30, 30A, 37, 37A, 40, 40A) ou l'émetteur de lumière (34, 39, 42, 104, 125, 145, 163) sur l'élément d'insertion de ceinture d'installation orienté vers l'arrière (30, 30A, 37, 37A, 40, 40A) est configuré pour s'allumer selon l'orientation du siège pour enfant (1, 1A) détectée par les moyens de détection d'orientation de siège pour enfant (170).

2. Siège pour enfant (1, 1A) selon la revendication 1, dans lequel chacun des éléments d'insertion de ceinture (37, 37A, 40, 40A, 30A, 30) a un détecteur de ceinture et, lorsque le détecteur de ceinture détecte la présence de la ceinture de sécurité (50), l'émetteur de lumière (34, 39, 42, 104, 125, 145, 163) sur cet élément d'insertion de ceinture (37, 37A, 40, 40A, 30A, 30) s'éteint.

3. Siège pour enfant (1, 1A) selon la revendication 2, dans lequel le détecteur de ceinture est un commutateur de limite (27, 33, 38, 41, 103, 124, 144, 162, 170) prévu pour venir en contact avec l'élément d'insertion de ceinture (37, 37A, 40, 40A, 30A, 30) qui est inséré à travers l'élément d'insertion de ceinture (37, 37A, 40, 40A, 30A, 30).

4. Siège pour enfant (1, 1A) selon la revendication 2 ou la revendication 3, comprenant en outre des moyens de commande qui commandent l'émetteur de lumière (34, 39, 42, 104, 125, 145, 163) de sorte que, à la première étape, l'émetteur de lumière (34, 39, 42, 104, 125, 145, 163) sur le premier élément d'insertion de ceinture (30, 30A, 37, 37A, 40, 40A) à travers lequel la ceinture de sécurité (50) doit être insérée, est amené à s'éclairer et s'éteindre ensuite lorsque le détecteur de ceinture sur le premier élément d'insertion de ceinture (30, 30A, 37, 37A, 40, 40A) détecte que la ceinture de sécurité (50) a été insérée à travers le premier élément d'insertion de ceinture (30, 30A, 37, 37A, 40, 40A), et à la seconde étape, l'émetteur de lumière (34, 39, 42, 104, 125, 145, 163) sur le second élément d'insertion de ceinture (30, 30A, 37, 37A, 40, 40A) à travers lequel la ceinture de sécurité (50) doit être insérée, est amené à s'éclairer et s'éteindre ensuite lorsque le détecteur de ceinture sur le second élément d'insertion de ceinture (30, 30A, 37, 37A, 40, 40A) détecte que la ceinture de sécurité (50) a été insérée à travers le second élément d'insertion de ceinture (30, 30A, 37, 37A, 40, 40A) et un commutateur de démarrage pour amener les moyens de commande à démarrer l'opération de commande.

5. Siège pour enfant (1, 1A) selon l'une quelconque des revendications 1 à 4, dans lequel l'émetteur de lumière (34, 39, 42, 104, 125, 145, 163) prévu sur l'élément d'insertion de ceinture d'installation orienté vers l'avant (30, 30A, 37, 37A, 40, 40A) est différent du point de la vue de la couleur de la lumière de l'émetteur de lumière (34, 39, 42, 104, 125, 145, 163) prévu sur l'élément d'insertion de ceinture d'installation orienté vers l'arrière (30, 30A, 37, 37A, 40, 40A).

6. Siège pour enfant (1, 1A) selon la revendication 5, dans lequel l'émetteur de lumière (34, 39, 42, 104, 125, 145, 163) prévu sur l'élément d'insertion de ceinture d'installation orienté vers l'avant (30, 30A, 37, 37A, 40, 40A) a une émission de lumière de couleur rouge et l'émetteur de lumière (34, 39, 42, 104, 125, 145, 163) prévu sur l'élément d'insertion de ceinture d'installation orienté vers l'arrière (30, 30A, 37, 37A, 40, 40A) a une émission de lumière de couleur bleue.

7. Siège pour enfant (1, 1A) selon l'une quelconque des revendications 1 à 6, dans lequel le siège pour enfant (1, 1A) est prévu au niveau de son fond avec un bloc de fond (24) qui est mobile au niveau du fond afin de prendre un emplacement vers l'arrière si le siège pour enfant (1, 1A) est monté pour être orienté vers l'avant ou vers l'arrière, et dans lequel les moyens de détection d'orientation de siège pour enfant (170) détectent l'orientation du siège pour enfant (1, 1A) sur la base de l'emplacement du bloc de fond (24).

8. Siège pour enfant (1, 1A) selon l'une quelconque des revendications 1 à 4, comprenant en outre une section de base (20) qui est montée sur le siège de véhicule à moteur et un corps de siège pour enfant (10) supporté afin de pouvoir s'incliner par rapport à la section de base (20),
dans lequel les moyens de détection d'orientation de siège pour enfant détectent l'orientation du siège pour enfant (1, 1A) sur la base d'un angle d'inclinaison du corps de siège pour enfant (10).

9. Siège pour enfant (1, 1A) selon l'une quelconque des revendications 1 à 8, comprenant en outre un harnais pour enfant afin de retenir un enfant assis sur le siège pour enfant (1, 1A), une languette (53, 62) prévue à l'extrémité du harnais pour enfant, une boucle (54, 63) ayant une fente d'insertion dans laquelle la languette (53, 62) est insérée, un capteur de languette pour détecter que l'insertion de la languette (53, 62) dans la fente d'insertion est terminée, un émetteur de lumière de fente d'insertion (34, 39, 42, 104, 125, 145, 163) prévu sur la fente d'insertion, un capteur d'assise pour détecter qu'un enfant est assis dans le siège pour enfant (1, 1A), et des moyens de commande qui mettent en marche l'émetteur de lumière de fente d'insertion (34, 39, 42, 104, 125, 145, 163) lorsque le capteur d'assise détecte que l'enfant est assis et éteint ensuite l'émetteur de lumière de fente d'insertion (34, 39, 42, 104, 125, 145, 163) lorsque le capteur de languette détecte l'insertion de la languette (53, 62).

10. Siège pour enfant (1, 1A) selon l'une quelconque des revendications 1 à 9, dans lequel l'éclairage de l'émetteur de lumière de fente d'insertion (34, 39, 42, 104, 125, 145, 163) est prévu sous la forme de clignotement.
